Europäisches Patentamt

European Patent Office

Office européen des brevets

(11) Numéro de publication: **0 389 351**
**A1**

## (12) DEMANDE DE BREVET EUROPEEN

(21) Numéro de dépôt: **90400740.8**

(22) Date de dépôt: **19.03.90**

(51) Int. Cl.⁵: **C12G 1/02**

(30) Priorité: **20.03.89 FR 8903610**

(43) Date de publication de la demande:
**26.09.90 Bulletin 90/39**

(84) Etats contractants désignés:
**DE ES IT**

(71) Demandeur: **ETA S.A. Société dite :**
**Rians**
**F-18220 Les Aix d'Angillon(FR)**

(72) Inventeur: **Triballat, Hubert Raymond**
**Petereau, Rians**
**F-18220 Les Aix D'Angillon(FR)**

(74) Mandataire: **Fort, Jacques**
**CABINET PLASSERAUD 84, rue d'Amsterdam**
**F-75009 Paris(FR)**

(54) **Procédé et dispositif de vinification et de pressage.**

㋡ Pour vinifier et presser une vendange fraîche, on remplit partiellement, avec cette vendange, une cuve (10) de vinification de forme cylindrique, rotative autour d'un axe approximativement horizontal, on laisse macérer et fermenter le jus en faisant tourner périodiquement la cuve au cours de la fermentation et on soutire le jus de goutte. On ensuite presse le marc contenu dans la cuve par introduction temporaire d'une poche (56) déformable dans la cuve et gonflage pneumatique de cette dernière pour obtenir le jus de presse.

FIG.1.

EP 0 389 351 A1

## Procédé et dispositif de vinification et de pressage

L'invention concerne les procédés et dispositifs de vinification, soutirage, pressage et démarcage. Bien que l'invention trouve une application particulièrement importante dans la préparation des vins, et notamment des vins rouges, le terme "vinification" doit être interprété dans un sens large et comme couvrant de façon générale la préparation des boissons alcoolisées par fermentation de fruits.

Un procédé classique de préparation des vins rouges consiste à charger la vendange, sans la fouler préalablement, dans une cuve de vinification où les grains éclatent sous l'effet de la fermentation alcoolique. Au cours de la fermentation se forme un chapeau de marc qui contient des matières colorantes et des arômes. On met en contact intime le jus et le chapeau qui surnage, souvent en triturant le chapeau ou en prélevant au fond de la cuve du jus qu'on déverse au-dessus du chapeau. Puis on soutire le vin de goutte par drainage, et on décuve le gâteau de marc restant qu'on transporte dans un pressoir pour obtenir le vin de presse.

Un procédé particulièrement avantageux, décrit dans le document FR-A-2 578 818 (demande de brevet 85 03616) de la demanderesse consiste à utiliser une cuve de vinification en forme de cylindre à axe sensiblement horizontal (éventuellement inclinable pour faciliter le démarcage), entraînable en rotation à vitesse lente. La rotation de la cuve se substitue à l'opération classique de relevage du jus, dont la brutalité affecte la qualité du vin, et au brassage mécanique, qui triture le chapeau et provoque, surtout dans le cas de vendange à la machine qui conduit à un mélange des grappes avec des feuilles et des herbes, à une action indésirable des corps étrangers sur les propriétés organo-leptiques du vin.

Ce procédé ne résout cependant pas un problème qui semble avoir été négligé jusqu'à présent, celui de l'oxydation provoquée par le passage à l'air de vendanges broyées ou de marc et qui intervient forcément lors de l'extraction du marc et de son transport jusqu'au pressoir.

L'invention vise notamment à fournir un procédé évitant l'oxydation, évitant également toute trituration du chapeau susceptible d'avoir une influence néfaste sur les propriétés organo-leptiques du vin obtenu et permettant une économie sensible de temps et de main d'oeuvre.

Pour cela, l'invention propose un procédé de vinification et de pressage suivant lequel on remplit partiellement une cuve de vinification de forme cylindrique, rotative autour d'un axe approximativement horizontal, de vendange fraîche, on laisse macérer et fermenter le jus en faisant tourner périodiquement la cuve au cours de la fermentation de façon à immerger le chapeau de marc et on soutire le jus de goutte, caractérisé en ce que l'on presse le marc contenu dans la cuve par introduction temporaire d'une poche déformable dans la cuve et gonflage pneumatique de la poche.

L'invention propose également un dispositif permettant de mettre en oeuvre le procédé ci-dessus défini, comportant une cuve de forme cylindrique, avantageusement inclinable à partir d'une position sensiblement horizontale, présentant une paroi terminale munie au moins d'une porte de décuvage du marc et présentant une paroi latérale munie d'une trappe de chargement, et comportant des moyens permettant d'entraîner la cuve en rotation à vitesse lente, caractérisé en ce que la cuve a une surface interne démunie d'aspérités, et en ce que la trappe est prévue pour livrer passage à une poche souple de pressage pneumatique.

Pour assurer le fractionnement du chapeau de marc lors de la rotation, sans brassage brutal qui provoquerait le passage de produits indésirables dans le jus, la paroi latérale de la cuve peut comporter des moyens d'insertion radiale temporaire de chandelles qui sont retirées avant mise en place de la poche.

L'invention sera mieux comprise à la lecture de la description qui suit d'un mode particulier de réalisation, donné à titre d'exemple non limitatif. La description se réfère aux dessins qui l'accompagnent, dans lesquels :

- La Figure 1 est une vue en élévation et en coupe longitudinale partielle d'un dispositif selon l'invention,

- La Figure 2 est une vue en coupe transversale, montrant un seul des manchons de réception provisoire de chandelles de fractionnement du chapeau, et

- La Figure 3 est un schéma de principe montrant un joint tournant pour un circuit d'échange thermique équipant la cuve du dispositif de la Figure 1.

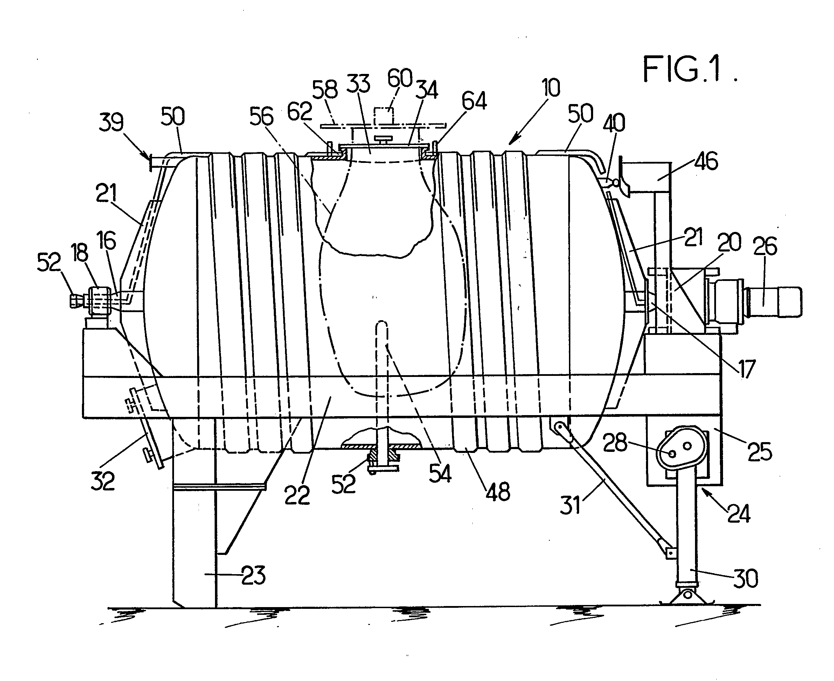

La cuve montrée sur la Figure 1 comprend une enceinte 10 ayant une virole cylindrique à axe sensiblement horizontal, montée de façon à pouvoir tourner autour de son axe. Etant donné que la cuve doit permettre l'introduction et le fonctionnement d'une poche de pressage, elle ne doit pas être traversée par un arbre. Pour cette raison, les fonds bombés 12 et 14 de la cuve sont fixés sur des tourillons 16 et 17 qui eux-mêmes tournent dans des paliers 18 et 20. Pour donner à la cuve la rigidité nécessaire en dépit de l'absence d'arbre interne, les tourillons 16 et 17 sont reliés aux fonds 12 et 14 par des raidisseurs 21 en forme de voiles radiaux.

Les paliers 18 et 20 reposent sur un bâti 22 muni de deux pieds avant 23 portant sur le sol, dont la traverse arrière 25 est portée par un vérin 24 qui permet de régler l'inclinaison de l'axe de la cuve depuis l'horizontale jusqu'à un angle suffisant pour l'extraction des marcs. Des moyens autres que ceux illustrés peuvent être utilisés pour supporter l'enceinte 10 en la laissant libre de tourner : par exemple la cuve peut rouler à une de ses extrémités, ou aux deux, sur des galets tournant sur un berceau.

La cuve est munie de moyens d'entraînement en rotation qui peuvent être de natures très diverses. Dans le mode de réalisation illustré, ces moyens comprennent un moteur 26 qui entraîne le tourillon 17. Ce moteur 26 peut être un moto-réducteur électrique classique, un moteur hydraulique, etc. Le moto-réducteur doit être prévu pour donner à la cuve une vitesse lente, de l'ordre d'un tour par minute et il est avantageusement réversible. Le moteur doit pouvoir jouer le rôle de frein ou un frein doit être prévu. Le moteur 26 se soulève en même temps que le palier, soulevant le tourillon 17 du fait qu'il appartient au même ensemble porté par le vérin 24.

Le vérin 24 peut avoir diverses constitutions. Dans le mode de réalisation illustré, il comporte un moto-réducteur de levage 28 et un cric 30 de secours actionnable à l'aide d'un levier 31.

Le fond 12 situé à l'opposé du vérin 24 est muni d'une porte de démarcage 32, qui peut être constituée par un simple panneau fixé à l'aide de vis autour d'une ouverture délimitée par une bride. Plusieurs portes 32 peuvent être prévues pour permettre le démarcage dans plusieurs orientations de la cuve.

La virole cylindrique de l'enceinte 10 comporte un trou d'homme 33 obturable par un capot 34 de fermeture étanche. Ce trou d'homme sert de cheminée de déversement de la vendange. On verra plus loin qu'il doit permettre d'introduire une poche de pressage ; pour cette raison, il sera généralement plus large que dans une cuve où le trou sert uniquement au déversement de la vendange.

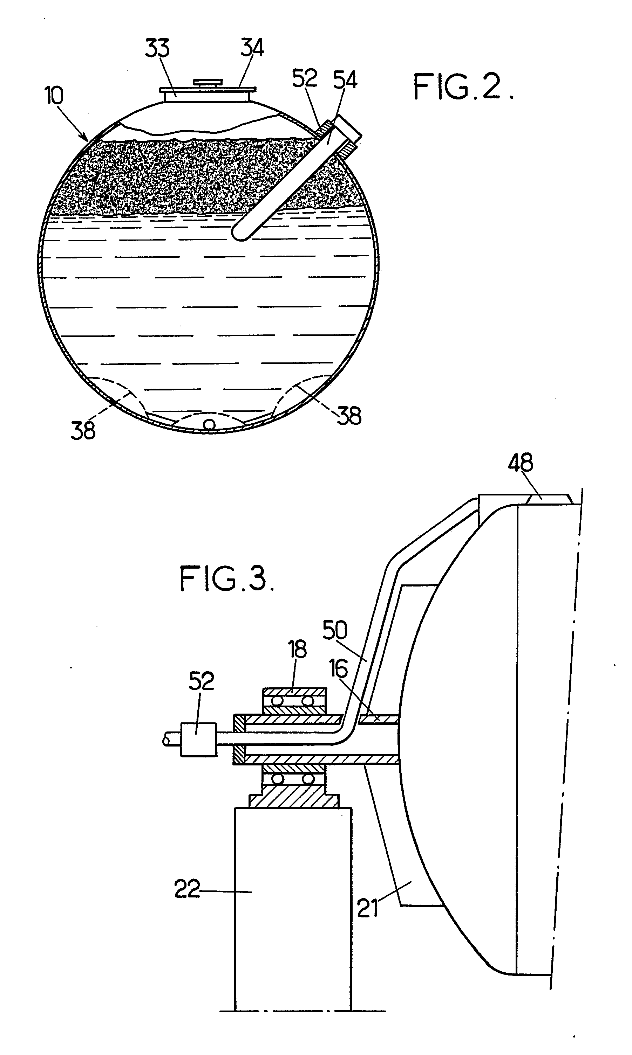

La cuve porte, suivant une génératrice opposée à celle où se trouve le trou d'homme 33, un robinet de soutirage qui est relié à des drains de filtration délimité par des grilles 38 de protection contre le colmatage par les raffles et les pépins. Les grilles 38 (figure 2) peuvent être du genre courant, à trous fraisés. Un robinet supplémentaire de vidange 39 peut être prévu sur le fond 12, à l'opposé du robinet de soutirage.

La fermentation alcoolique dans la cuve dégage du gaz carbonique qui doit pouvoir s'échapper lorsque le capot 34 est en place. Pour cela, la cuve est munie de moyens d'échappement du gaz à partir de la zone de la cuve qui se trouve en haut pour une position angulaire donnée. Pour cela, la cuve est munie de plusieurs soupapes 40, dont une seule est représentée sur la figure 1, portées par le fond 14 et disposées à intervalles angulaires réguliers. Chaque soupape est munie d'un ressort de rappel tendant à la fermer. Une came fixe 46 portée par le bâti 22 présente un profil tel qu'elle ouvre la soupape 40 se trouvant en position haute. Le développement angulaire de cette came est tel qu'il y ait toujours au moins une soupape 40 ouverte de façon à permettre l'évacuation du gaz carbonique.

Il est possible de prévoir des robinets à commande manuel le (non représentés) pour évacuer le gaz carbonique par ouverture du robinet placé le plus haut en cas de panne des soupapes 40.

La cuve représentée est munie d'un échangeur de chaleur, permettant de régler la température, et notamment de l'élever, pour amorcer la fermentation et/ou éviter un échauffement excessif. Cet échangeur thermique comporte un serpentin 48, plaqué contre la virole de l'enceinte 10, raccordé à un circuit extérieur de liquide par des tubulures rigides 50 et des joints tournants 52 disposés par exemple comme illustré sur la Figure 3.

Pour que la rotation de la cuve provoque le mélange du jus et du chapeau, il est souhaitable de prévoir des moyens pour fractionner le chapeau. Mais la présence permanente de moyens efficaces pour atteindre ce résultat est incompatible avec la mise en place d'une poche de pressage. Dans la cuve suivant l'invention montrée en Figure 1, cette difficulté est résolue en munissant la virole de manchons de traversée (dont un seul, 52, est représenté) prévus pour livrer passage soit à des chandelles 54 en saillie jusqu'à proximité de l'axe, soit à des bouchons de fermeture étanche. Plusieurs chandelles peuvent être réparties sur la virole, suivant un tracé hélicoïdal par exemple, pour diminuer l'effort nécessaire ou remontage du marc.

Comme on l'a indiqué plus haut, le trou d'homme 33 est prévu pour autoriser l'insertion d'une poche ou vessie de pressage 56, suspendue à une tape 58 munie d'un raccord 60 d'amenée de gaz sous pression. La tape 58 est généralement munie de crochets de levage permettant de transporter la poche à l'aide d'un palan. La poche elle-même peut avoir une constitution connue : on réalise à l'heure actuelle des poches sur mesure, en panneaux de tissu à base d'élastomère thermosoudable.

On sait fabriquer de telles poches aux mesures de cuves cylindriques du genre concerné par l'invention. Il peut être préférable de ne pas dépasser un rapport d'environ 2/1 entre la longueur de la cuve et son diamètre pour faciliter le déploiement de la poche.

Un plateau 62 muni de pions d'accrochage 64 peut être prévu à la partie supérieure de la virole pour servir d'ancrage à la tape 58.

Le procédé suivant l'invention peut être mis en oeuvre de la façon suivante dans la cuve qui vient d'être décrite.

La cuve vide étant dans l'orientation montrée sur les Figures 1 et 2, on y place les chandelles 54. On enlève le capot 34 et on déverse la vendange fraîche jusqu'à ce que ne subsiste qu'un vide de 5 à 10 % environ de la capacité totale de l'enceinte 10. Le capot est refermé, protégeant ainsi la vendange contre l'action de l'oxygène de l'air. Les surpressions sont évitées du fait qu'une soupape 40 reste ouverte. Lorsque la fermentation a commencé et que le chapeau se forme, on fait tourner la cuve de quelques rotations par jour. Au cours de cette rotation, les chandelles 54 mises en place avant remplissage fractionne le chapeau, homogénéisent le milieu et font passer les matières colorantes et les arômes du marc dans le jus.

A la fin de la fermentation, la cuve est arrêtée dans l'orientation pour laquelle le capot 34 est en position haute. Le vin de goutte est soutiré par les drains de filtration et le robinet.

Après épuisement du vin de goutte, on retire les chandelles 54 et on les remplace par des bouchons étanches : pour cela, on fait tourner la cuve pour amener chaque manchon 52 à son tour vers le haut. Puis on enlève le capot 34 et on amène la poche de pressage repliée, suspendue à la tape 58, au-dessus du trou d'homme. La poche est descendue et la tape 58 insérée sur les pions 64. On peut alors extraire le vin de presse par gonflage de la poche, éventuellement en plusieurs fois. En général, la pression maximale pneumatique dans la poche peut atteindre 1,8 à 2 bars (absolus).

Pour décuver le marc, on extrait la poche de pressage, on replace le capot 34, et on opère suivant le procédé déjà décrit dans la demande de brevet FR 85 03616.

Bien que la cuve présente un intérêt particulier dans le cas de la vinification en vin rouge, il reste possible de l'utiliser pour des vins blancs, aussi bien en vinification traditionnelle qu'avec macération carbonique. Dans ce cas cependant, on n'effectue pas un soutirage séparé du vin de goutte et du vin de presse.

**Revendications**

1. Procédé de vinification et de pressage suivant lequel on remplit partiellement de vendante fraîche une cuve (10) de vinification de forme cylindrique, rotative autour d'un axe approximativement horizontal, on laisse macérer et fermenter le jus en faisant tourner périodiquement la cuve au cours de la fermentation et on soutire le jus de goutte, **caractérisé en ce que** l'on presse le marc contenu dans la cuve par introduction temporaire d'une poche déformable dans la cuve et gonflage pneumatique de cette dernière pour obtenir le jus de presse.

2. Procédé selon la revendication 1, caractérisé en ce que la paroi latérale de la cuve porte des manchons ménageant des trous de passage étanche et de fixation de moyens mécaniques en saillie de fractionnement du chapeau de marc, remplaçables par des bouchons.

3. Dispositif de vinification et de pressage, comprenant une cuve de vinification (10) de forme cylindrique, à axe approximativement horizontal, dont une paroi terminale est munie d'une porte (32) de décuvage du marc et dont une paroi latérale est munie d'un trou de chargement et comprenant des moyens (26) permettant d'entraîner la cuve en rotation à vitesse lente autour de son axe, **caractérisé en ce que** la cuve a une surface interne démunie d'aspérités **et en ce que** le trou de chargement est délimité par des moyens permettant de livrer passage à une poche souple (56) de pressage pneumatique munie d'une tape de fermeture du trou.

4. Dispositif selon la revendication 3, caractérisé en ce que la paroi latérale de la cuve comporte des moyens d'insertion radiale temporaire de chandelles (54) remplaçables par des bouchons avant mise en place de la poche pour pressage.

5. Dispositif selon la revendication 3 ou 4, caractérisé en ce que la cuve présente des tourillons axiaux (16) portés par des paliers (18, 20), les tourillons étant reliés aux fonds de la cuve par des raidisseurs (21) radiaux.

6. Dispositif selon une quelconque des revendications 3 à 5, caractérisé en ce qu'un des fonds de la cuve est muni de plusieurs soupapes (40) disposées à intervalles angulaires réguliers et en ce qu'il comporte également une came fixe (46) de profil tel qu'elle ouvre la soupape (40) située en position haute, le développement angulaire de la came étant tel qu'il y ait toujours au moins une soupape ouverte.

7. Dispositif selon l'une quelconque des revendications 3 à 6, caractérisé en ce que la cuve est munie de moyens pour donner à l'axe de la cuve une inclinaison variable depuis l'horizontale jusqu'à une pente, suffisante pour le démarcage, vers le fond muni de la porte de décuvage (32).

8. Dispositif selon l'une quelconque des revendications 3 à 7, caractérisé en ce que les moyens délimitant le trou de chargement comportent des pions (64) de retenue de la tape (58).

FIG.1 .

EP 0 389 351 A1

EP 0 389 351 A1

FIG.2.

FIG.3.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 906 323  (BUCHER-GUYER AG MASCHINENFABRIK) <br> * Figure 3; page 9, lignes 9-23; revendication 1 * <br> --- | 1,3 | C 12 G    1/02 |
| Y | DE-A-3 615 551  (QUETSCH) <br> * Revendications 1,7,17; figure 3 * <br> --- | 1,3,6,7 | |
| Y,D | FR-A-2 578 818  (ETA) <br> * Revendications 1,4-8; figure * <br> ----- | 1,3,6,7 | |

**DOMAINES TECHNIQUES RECHERCHES (Int. Cl.5)**

C 12 G

Le présent rapport a été établi pour toutes les revendications

| Lieu de la recherche | Date d'achèvement de la recherche | Examinateur |
|---|---|---|
| LA HAYE | 12-06-1990 | EPAILLARD P.J.H.M. |